# EUROPÄISCHE PATENTANMELDUNG

(11) **EP 2 886 925 A1**
(43) Veröffentlichungstag der Anmeldung: **24.06.2015**
(21) Anmeldenummer: 14197036.8
(22) Anmeldetag: 09.12.2014
(51) Int. Cl.: F16L 37/42, F16L 37/40, F16L 37/08

(54) **Steckverbinder mit Auslaufschutz**

(30) Priorität: 17.12.2013 DE 202013105733 U
(71) Anmelder: VERITAS AG, 63571 Gelnhausen (DE)
(72) Erfinder: Gutgesell, Ralf, 36381 Schlüchtern (DE); Hartmann, Thomas, 63571 Gelnhausen (DE); Schindler, Thomas, 63768 Hösbach (DE); Niessner, Heiko, 63619 Bad Orb (DE)
(74) Vertreter: Klinski, Robert

(57) **Zusammenfassung**

Die vorliegende Erfindung betrifft einen Steckverbinder (100) für eine Fluidleitung mit einem Stutzen (101) zum Aufsetzen eines Anschlussstückes (103), mit einer Ventilkammer (105) mit einer Einlassöffnung (107) und einer Auslassöffnung (109) für ein Fluid; einem Schließkörper (111), der in der Ventilkammer (105) verschiebbar ist, zum Verschließen der Auslassöffnung (109) in einer Schließstellung; und einem Betätigungselement (113) zum Verschieben des Schließkörpers (111) in eine Öffnungsstellung innerhalb der Ventilkammer (105) beim Aufschieben des Anschlussstückes (103) auf den Stutzen (101).

## Beschreibung

Die vorliegende Erfindung betrifft einen Steckverbinder für eine Fluidleitung mit einem Stutzen zum Aufsetzen eines Anschlussstückes.

Es ist die der Erfindung zugrundeliegende Aufgabe, einen Steckverbinder anzugeben, bei dem ein Auslaufen von Flüssigkeit nach einem Trennen der Verbindung effektiv verhindert wird.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Steckverbinder für eine Fluidleitung mit einem Stutzen zum Aufsetzen eines Anschlussstückes gelöst, mit einer Ventilkammer mit einer Einlassöffnung und einer Auslassöffnung für ein Fluid; einem Schließkörper, der in der Ventilkammer verschiebbar ist, zum Verschließen der Auslassöffnung in einer Schließstellung; und einem Betätigungselement zum Verschieben des Schließkörpers in eine Öffnungsstellung innerhalb der Ventilkammer beim Aufschieben des Anschlussstückes auf den Stutzen. Der Steckverbinder ist beispielsweise ein Steckverbinder für Kraftstoffvorlaufleitungen in Kraftfahrzeugen. Durch den Steckverbinder wird beispielsweise der technische Vorteil erreicht, dass die Fluidleitung erst mit einem Aufstecken des Anschlussstückes freigeben wird und so ein Auslaufen des Fluides verhindert werden kann.

In einer vorteilhaften Ausführungsform des Steckverbinders läuft das Betätigungselement ringförmig um den Stutzen um. Dadurch wird beispielsweise der technische Vorteil erreicht, dass eine umlaufende Fläche zum Betätigen des Betätigungselements durch das Anschlussstück erreicht wird.

In einer weiteren vorteilhaften Ausführungsform des Steckverbinders umfasst das Betätigungselement zwei gegenüberliegende Arme zum Verschieben des Schließkörpers. Dadurch wird beispielsweise der technische Vorteil erreicht, dass an jeder Seite des Schließkörpers eine Kraft anliegt und ein Verkannten des Schließkörpers verhindert wird.

In einer weiteren vorteilhaften Ausführungsform des Steckverbinders umfasst der Schließkörper einen Dichtring zum Abdichten der Auslassöffnung. Dadurch wird beispielsweise der technische Vorteil erreicht, dass eine hohe Dichtwirkung erzielt wird.

In einer weiteren vorteilhaften Ausführungsform des Steckverbinders weist die Ventilkammer eine seitliche Öffnung auf, durch die das Betätigungselement mit dem Schließkörper verbunden ist. Dadurch wird beispielsweise der technische Vorteil erreicht, dass das Betätigungselement seitlich an dem Schließkörper angreifen kann.

In einer weiteren vorteilhaften Ausführungsform des Steckverbinders umfasst der Schließkörper einen ersten Dichtring, der um den Schließkörper umläuft und der auf der einen Seite der seitlichen Öffnung angeordnet ist und einen zweiten Dichtring, der um den Schließkörper umläuft und der auf der einen Seite der seitlichen Öffnung angeordnet ist. Dadurch wird beispielsweise der technische Vorteil erreicht, dass ein Austreten des Fluides durch die seitliche Öffnung verhindert wird.

In einer weiteren vorteilhaften Ausführungsform des Steckverbinders umfasst der Schließkörper eine erste umlaufende Nut zum Einsetzen des ersten Dichtrings und eine zweite umlaufende Nut zum Einsetzen des zweiten Dichtrings. Dadurch wird beispielsweise der technische Vorteil erreicht, dass der Sitz der Dichtringe an dem Schließkörper verbessert wird.

In einer weiteren vorteilhaften Ausführungsform des Steckverbinders umfasst der Steckverbinder eine Feder zum Drücken des Schließkörpers auf die Auslassöffnung. Dadurch wird beispielsweise der technische Vorteil erreicht, dass ein Rückschlagventil gebildet wird, durch das ein Ausströmen des Fluid verhindert wird.

In einer weiteren vorteilhaften Ausführungsform des Steckverbinders umfasst der Stutzen einen umlaufenden Rastabschnitt zum Verrasten des Anschlussstückes auf dem Stutzen. Dadurch wird beispielsweise der technische Vorteil erreicht, dass der Schließkörper nach dem Aufrasten des Anschlussstückes in einer Öffnungsposition gehalten wird.

In einer weiteren vorteilhaften Ausführungsform des Steckverbinders umfasst der Schließkörpers eine Durchgangsöffnung zum Durchleiten des Fluids in einer Öffnungsstellung des Schließkörpers. Dadurch wird beispielsweise der technische Vorteil erreicht, dass eine hoher Durchtritt des Fluides ermöglicht wird.

In einer weiteren vorteilhaften Ausführungsform des Steckverbinders umfasst der Schließkörper einen tellerförmigen Dichtabschnitt zum Verschließen der Auslassöffnung. Dadurch wird beispielsweise der technische Vorteil erreicht, dass die Auslassöffnung effizient verschlossen werden kann.

In einer weiteren vorteilhaften Ausführungsform des Steckverbinders umfasst der tellerförmige Dichtabschnitt einen größeren Durchmesser als die Auslassöffnung. Dadurch wird beispielsweise der technische Vorteil erreicht, dass ein Dichtring auf dem tellerförmigen Dichtabschnitt angeordnet werden kann, der die Auslassöffnung ringförmig umläuft.

In einer weiteren vorteilhaften Ausführungsform des Steckverbinders weist der tellerförmige Dichtabschnitt einen geringeren Durchmesser als die Ventilkammer auf, damit das Fluid in der Öffnungsstellung des Schließkörpers zwischen dem Dichtabschnitt und einer Seitenwand der Ventilkammer vorbeiströmen kann. Dadurch wird beispielsweise der technische Vorteil erreicht, dass sich die Strömung des Fluides um den Schließkörper verbessert.

In einer weiteren vorteilhaften Ausführungsform des Steckverbinders ist der Schließkörper durch einen zylinderförmigen Hohlkörper gebildet. Dadurch wird beispielsweise der technische Vorteil erreicht, dass der Schließkörper mit einem geringen Materialaufwand hergestellt werden kann.

In einer weiteren vorteilhaften Ausführungsform des Steckverbinders sind der Schließkörper und das Betätigungselement durch ein einstückiges Formteil gebildet. Dadurch wird beispielsweise der technische Vorteil erreicht, dass eine Verbindung mit hoher Stabilität zwischen dem Betätigungselement und dem Schließkörper erreicht wird.

Ausführungsbeispiele der Erfindung sind in den Zeichnungen dargestellt und werden im Folgenden näher beschrieben.

Es zeigen:
- Fig. 1: eine Ansicht eines Steckverbinders;
- Fig. 2A und 2B: Querschnittsansichten des Steckverbinders in Schließstellung und in Öffnungsstellung;
- Fig. 3A und 3B: weitere Querschnittsansichten des Steckverbinders in Schließstellung und in Öffnungsstellung; und
- Fig. 4: eine Querschnittsansicht des Steckverbinders;

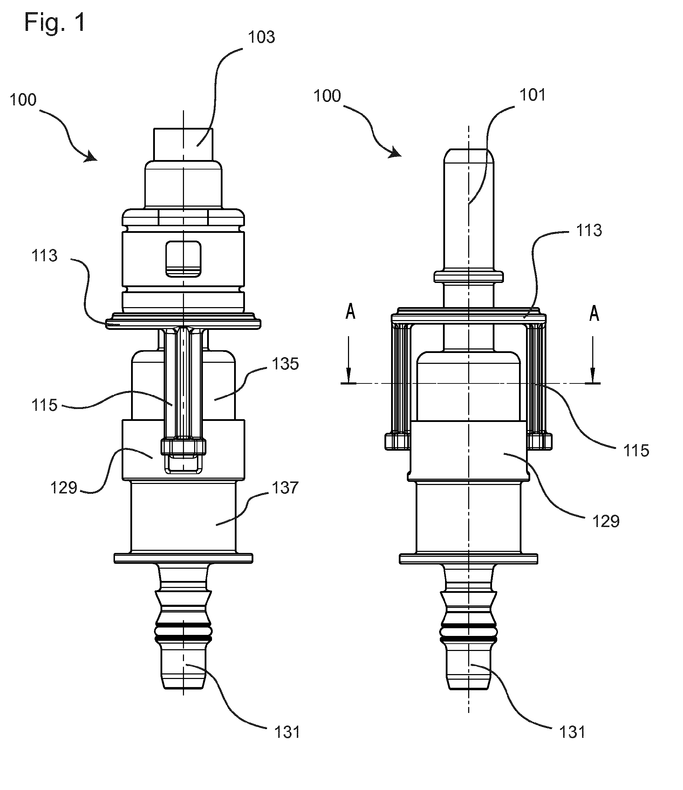

Fig. 1 zeigt eine Ansicht eines Steckverbinders 100. Der Steckverbinder ist beispielsweise ein Steckverbinder 100 für Kraftstoffvorlaufleitungen in einem Kraftfahrzeug. Der Steckverbinder 100 umfasst eine Auslaufschutzfunktion, die einen Kraftstoffaustritt bei offenem Leitungsende verhindert. Der Steckverbinder 100 ist aus einem zylinderförmigen Gehäuse 129 gebildet, in dem sich eine Ventilkammer befindet. An einem Stutzen 131 ist eine nicht gezeigte Fluidleitung angeschlossen. An einem anderen Stutzen 101 wird eine weitere Fluidleitung mittels eines Anschlussstückes 103 aufgesteckt und angeschlossen.

Das Gehäuse 129 ist aus einem Gehäuseoberteil 135 und einem Gehäuseunterteil 137 zusammengesetzt. Das Gehäuseoberteil 135 und das Gehäuseunterteil 137 können beispielsweise mittels eines geeigneten Schweißverfahrens miteinander verschweißt werden. Das Gehäuseoberteil 135 und das Gehäuseunterteil 137 sind beispielsweise Kunststoffformteile, die mittels eines Spritzgussverfahrens gebildet werden.

Außerhalb des Gehäuses 129 ist ein bewegliches, außen liegendes Betätigungselement 113 mit mindestens zwei Armen 115 gebildet, die sich parallel zum Gehäuse 129 erstrecken. Das im Querschnitt u-förmige Betätigungselement 113 umschließt den Stutzen 101 ringförmig und ist entlang der Längsachse des Stutzens 101 verschiebbar. Durch das bewegliche Betätigungselement 113 wird ein Schließkörper im Inneren der Ventilkammer zwischen einer Öffnungsstellung und einer Schließstellung verschoben.

Das Betätigungselement 113 wird beim Aufsetzen des Anschlussstücks 103 auf den Stutzen 101 des Steckverbinders 100 in die Öffnungsstellung verschoben, so dass automatisch mit dem Aufsetzen des Anschlussstücks 103 die Fluidleitung freigegeben wird. Wird das Anschlussstück 103 wieder von dem Stutzen 101 abgezogen, bewegt sich der Schließkörper im Inneren der Ventilkammer wieder in die Schließstellung, so dass die Fluidleitung gesperrt ist und ein Auslaufen des Fluides verhindert wird. Dadurch kann ein Austreten des Fluides beim Abziehen des Anschlussstücks 103 zuverlässig verhindert werden. Der Auslaufschutz ist somit durch ein im Steckverbinder 100 eingebrachtes Rückschlagventil realisiert, das sich durch Federwirkung selbstständig schließt. Der Steckverbinder 100 kann aus einer Kombination von Metall und einem Spritzgussteil bestehen.

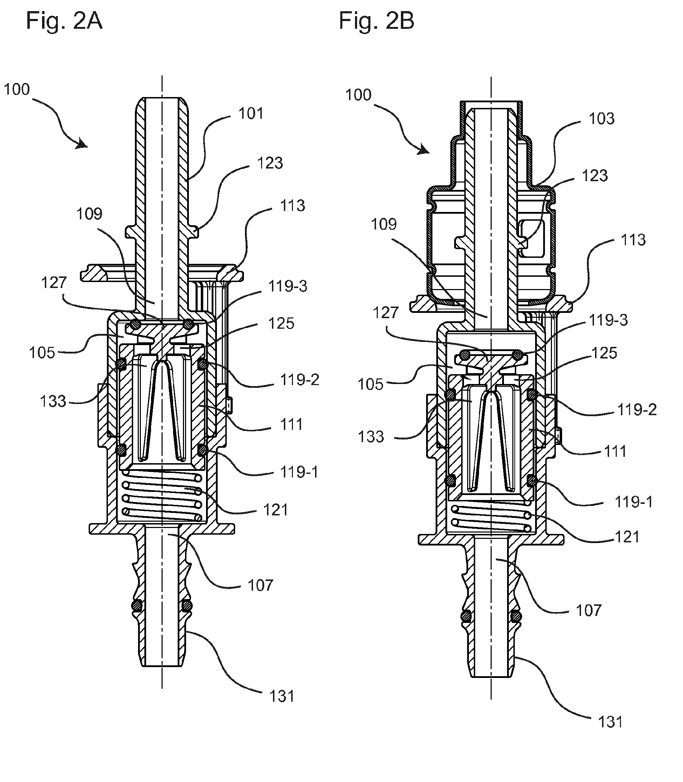

Fig. 2A zeigt eine Querschnittsansicht des Steckverbinders 100 in Schließstellung und Fig. 2B zeigt eine Querschnittsansicht des Steckverbinders 100 in Öffnungsstellung. In der Schließstellung dichtet der bewegliche Schließkörper 111 die Auslassöffnung 109 ab, indem der tellerförmige Dichtabschnitt 127 des Schließkörpers 111 auf der Auslassöffnung 109 liegt. Der tellerförmige Dichtabschnitt 127 weist einen größeren Durchmesser als die Auslassöffnung 109 und einen umlaufenden Dichtring 119-3 auf, der die Auslassöffnung 109 umläuft. Der Dichtring 119-3 ist beispielsweise ein elastischer O-Ring. Der tellerförmige Dichtabschnitt 127 weist einen geringeren Durchmesser als die Ventilkammer 105 auf, so dass der Rand des tellerförmigen Dichtabschnitt 127 von der Seitenwand der Ventilkammer 105 beabstandet ist und sich ein Spalt bildet. Der Schließkörper 111 ist beispielsweise ein Spritzgussformteil aus Kunststoff.

In der Öffnungsstellung ist der Schließkörper 111 zurückgezogen, so dass der tellerförmige Dichtabschnitt 127 die Auslassöffnung 109 freigibt und das Fluid durch den Spalt fließen kann, der zwischen dem Dichtabschnitt 127 und der Seitenwand der Ventilkammer 105 gebildet wird. Damit sich der Schließkörper 111 in die Öffnungsposition bewegt und das Fluid fließen kann, wird bei einer Kopplung mit dem Anschlussstück 103 mittels des Betätigungselements 113 ein Gegendruck auf die Feder 121 erzeugt, der zur Öffnung des Ventils führt.

Das Betätigungselement 113 läuft ringförmig um den Stutzen 101 herum, so dass das Betätigungselement 113 durch das Anschlussstück 103 beim Aufsetzen verschoben werden kann. Der ringförmige Abschnitt des Betätigungselementes 113 ist nach Innen hin abgeschrägt, so dass das Anschlussstück 103 ein Stück weit in die Öffnung des ringförmigen Abschnitts eindringen kann. Dadurch wird die Bewegung des Betätigungselements 113 stabilisiert und die Kräfte beim Aufsetzen des Anschlussstückes 103 werden gleichmäßig ausgeübt. Die mechanische Kopplung mit dem Schließkörper 111 findet über die Arme 115 des Betätigungselementes 113 statt.

Der Schließkörper 111 umfasst eine Anzahl von Durchgangsöffnungen 125, die Kanäle bilden, durch die das Fluid in der Öffnungsstellung durch den Schließkörper 111 hindurchtreten kann. Auf diese Weise kann das Fluid von der Einlassöffnung 107 des Steckverbinders 100 zu der Auslassöffnung 109 des Steckverbinders 100 fließen. Der Schließkörper 111 ist durch einen zylinderförmigen Hohlkörper gebildet, an dessen Innenseite nach innen ragende Verstärkungsstreben 133 befinden. Die Höhe der Verstärkungsstreben 133 nimmt zum tellerförmigen Dichtabschnitt 127 hin zu. Die Außenseite des Schließkörpers 111 liegt an der Innenseite der Ventilkammer 105 an. Der Schließkörper 111 wird durch die Innenseite der zylinderförmigen Ventilkammer 105 geführt.

In der Seitenwand der Ventilkammer 105 sind Öffnungen gebildet, durch die der Schließkörper 111 mit dem Betätigungselement 113 verbunden ist. Die Öffnungen sind derart länglich gestaltet, dass eine Verschiebung des Schließkörpers 111 ermöglicht wird. Der Schließkörper 111 umfasst einen ersten Dichtring 119-1, der um den Schließkörper 111 umläuft und der auf der einen Seite der seitlichen Öffnung angeordnet ist. Weiter umfasst der Schließkörper 111 einen zweiten Dichtring 119-2, der um den Schließkörper 111 umläuft und der auf der anderen Seite der seitlichen Öffnung angeordnet ist. Durch diese Anordnung der Dichtringe 119-1 und 119-2 kann ein Austritt des Fluides aus der seitlichen Öffnung verhindert werden.

An dem Stutzen 101 ist ein umlaufender Ringabschnitt als Rastabschnitt 123 gebildet. Das Anschlussstück 103 rastet beim Aufstecken auf den Stutzen 101 an dem Rastabschnitt 123 ein und fixiert so den Schließkörper 111 über das Betätigungselement 113 in seiner Öffnungsstellung. In der Öffnungsstellung des Schließkörpers 111 kann das Fluid in beiden Richtungen durch den Schließkörper 111 hindurchtreten.

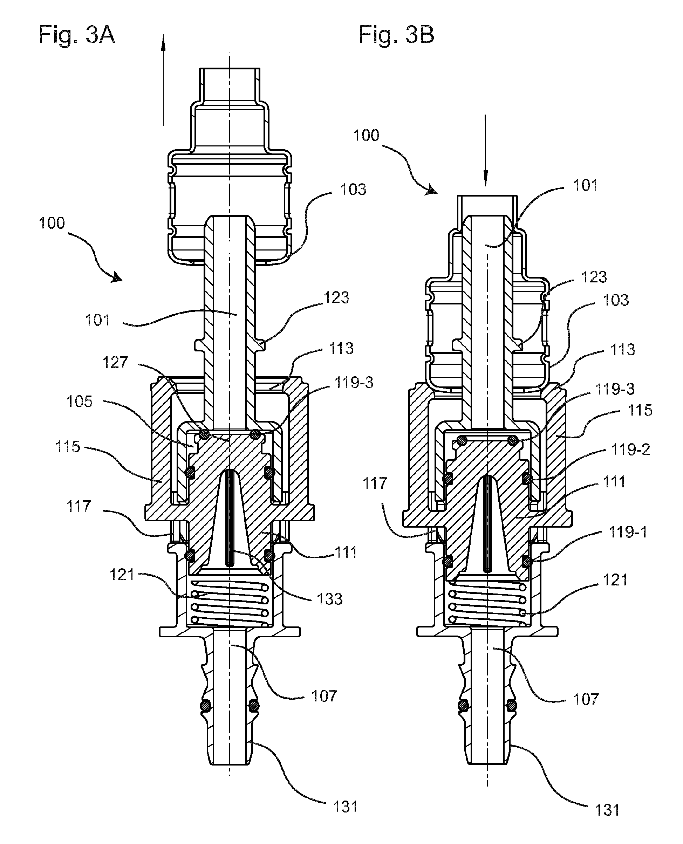

Fig. 3A zeigt eine weitere Querschnittsansicht des Steckverbinders 100 in Schließstellung und Fig. 3B zeigt eine weitere Querschnittsansicht des Steckverbinders 100 in Öffnungsstellung. Das Betätigungselement 113 umfasst zwei gegenüberliegend angeordnete Arme 115, die an der Außenseite des Steckverbinders 100 verlaufen. Die Arme 115 des Betätigungselements 113 erstrecken sich an einer Außenseite des Steckverbinders 100 und sind über die Öffnung 117 mit dem Schließkörper 111 verbunden. Die Öffnung 117 ist derart gestaltet, dass sich die Arme 115 zusammen mit dem Schließkörper 111 in der Öffnung 117 in Längsrichtung verschieben lassen. Die beiden Arme 115 des Betätigungselementes 113 üben an beiden Seiten eine Kraft auf den Schließkörper 111 aus, so dass ein Verklemmen des Schließkörpers 111 in der Ventilkammer 105 verhindert wird.

Der erste Dichtring 119-1 läuft oberhalb der Öffnung 117 um den Schließkörper 111 herum und der zweite Dichtring läuft unterhalb der Öffnung 117 um den Schließkörper herum. Dadurch kann ein Austreten des Fluides aus der Ventilkammer 105 durch die Öffnung 117 verhindert werden. Der Schließkörper 111 umfasst jeweils eine umlaufende Nut zum Einsetzen der Dichtringe 119-1 und 119-2, so dass die Dichtringe 119-1 und 119-2 bei einer Verschiebung des Schließkörpers 111 die Position beibehalten. Die Dichtringe 119-1 und 119-2 sind beispielsweise durch elastische O-Ringe gebildet. Der tellerförmige Dichtabschnitt 127 befindet sich gegenüber der Einlassöffnung und ist gegenüber dem übrigen Schließkörper 111 abgestuft.

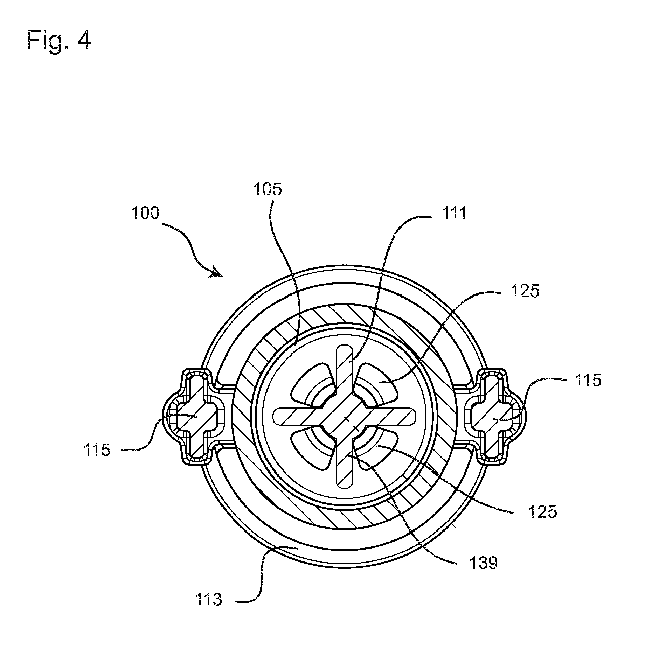

Fig. 4 zeigt eine Querschnittsansicht des Steckverbinders 100 entlang der Linie A-A aus Fig. 1. Der im Querschnitt kreisförmige Schließkörper 111 liegt im Inneren der ebenfalls kreisförmigen Ventilkammer 105. Der Schließkörper 111 umfasst vier segmentförmige Durchgangsöffnungen 125, durch die in der Öffnungsstellung des Schließkörpers 111 das Fluid hindurchtreten kann. Der nicht gezeigte Dichtabschnitt 127 ist mittels eines in Querschnitt kreuzförmigen Abschnitts 139 an dem Schließkörper 111 befestigt. Links und rechts der Ventilkammer 105 befinden sich die beiden gegenüberliegenden Arme 115 des Betätigungselementes 113.

Der Steckverbinder 100 ermöglicht unterschiedliche Anbindungsmethoden. Zudem können neue Anschlussprofile mit geringen Werkzeugkosten eingebracht werden, indem die jeweiligen Spritzgussteile getauscht werden, wie beispielsweise das Gehäuseoberteil 135, das Gehäuseunterteil 137 oder der Schließkörper 111. Eine Anpassung der Geometrie des Steckverbinders 100 an bekannte Schnellkupplungen als Anschlussstück 103 ist daher leicht möglich.

Der Steckverbinder 100 schützt vor ungewollt auslaufenden Flüssigkeiten, beispielsweise brennbaren Kraftstoffen, bei einem Start eines Motors, falls das Anschlussstück 103 nicht angeschlossen sein sollte. Die Unfallbeständigkeit kann dadurch erzeugt werden, dass einzelne Teile des Steckverbinders 100 aus Metall hergestellt werden. Durch das Baukastensystem der Einzelteile des Steckverbinders 100 können unterschiedliche Schläuche oder leitungsartige Halbzeuge angeschlossen werden.

Im Anschlussbereich kann ein Spritzgussteil mit anwendungsspezifischer Ausformung in Kunststoff verwendet werden, das es ermöglicht einen Dichtringsitz mit montiertem Dichtring einzubringen. Der Steckverbinder 100 kann in diesem Fall für Kraftstoffvorlaufleitungen eingesetzt werden. Der Schließkörper 111 kann anwendungstechnisch als Tannenbaumprofil mit oder ohne O-Ring, mit Rotationsschweißgeometrie, Schlauchstutzen, in verschiedenen Dimensionssprüngen oder anderweitig ausgeführt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Steckverbinder
- 101: Stutzen
- 103: Anschlussstück
- 105: Ventilkammer
- 107: Einlassöffnung
- 109: Auslassöffnung
- 111: Schließkörper
- 113: Betätigungselement
- 115: Arm
- 117: Öffnung
- 119: Dichtring
- 121: Feder
- 123: Rastabschnitt
- 125: Durchgangsöffnung
- 127: Dichtabschnitt
- 129: Gehäuse
- 131: Stutzen
- 133: Verstärkungsstreben
- 135: Gehäuseoberteil
- 137: Gehäuseunterteil
- 139: kreuzförmiger Abschnitt

## Patentansprüche

1. Steckverbinder (100) für eine Fluidleitung mit einem Stutzen (101) zum Aufsetzen eines Anschlussstückes (103), mit:
einer Ventilkammer (105) mit einer Einlassöffnung (107) und einer Auslassöffnung (109) für ein Fluid;
einem Schließkörper (111), der in der Ventilkammer (105) verschiebbar ist, zum Verschließen der Auslassöffnung (109) in einer Schließstellung; und
einem Betätigungselement (113) zum Verschieben des Schließkörpers (111) in eine Öffnungsstellung innerhalb der Ventilkammer (105) beim Aufschieben des Anschlussstückes (103) auf den Stutzen (101).

2. Steckverbinder (100) nach Anspruch 1, wobei das Betätigungselement (113) ringförmig um den Stutzen (101) umläuft.

3. Steckverbinder (100) nach einem der vorangehenden Ansprüche, wobei das Betätigungselement (113) zumindest zwei gegenüberliegende Arme (115) zum Verschieben des Schließkörpers (111) umfasst.

4. Steckverbinder (100) nach einem der vorangehenden Ansprüche, wobei der Schließkörper einen Dichtring (119-3) zum Abdichten der Auslassöffnung (109) umfasst.

5. Steckverbinder (100) nach einem der vorangehenden Ansprüche, wobei die Ventilkammer (105) eine seitliche Öffnung (117) aufweist, durch die das Betätigungselement (113) mit dem Schließkörper (111) verbunden ist.

6. Steckverbinder (100) nach Anspruch 5, wobei der Schließkörper (111) einen ersten Dichtring (119-1) umfasst, der um den Schließkörper (111) umläuft und der auf der einen Seite der seitlichen Öffnung (117) angeordnet ist und einen zweiten Dichtring (119-2) umfasst, der um den Schließkörper (111) umläuft und der auf der anderen Seite der seitlichen Öffnung (117) angeordnet ist.

7. Steckverbinder (100) nach Anspruch 6, wobei der Schließkörper (111) eine erste umlaufende Nut zum Einsetzen des ersten Dichtrings (119-1) und eine zweite umlaufende Nut zum Einsetzen des zweiten Dichtrings (119-2) umfasst.

8. Steckverbinder (100) nach einem der vorangehenden Ansprüche, wobei der Steckverbinder (100) eine Feder (121) zum Drücken des Schließkörpers (111) auf die Auslassöffnung (109) umfasst.

9. Steckverbinder (100) nach einem der vorangehenden Ansprüche, wobei der Stutzen (101) einen umlaufenden Rastabschnitt (123) zum Verrasten des Anschlussstückes (103) auf dem Stutzen (101) umfasst.

10. Steckverbinder (100) nach einem der vorangehenden Ansprüche, wobei der Schließkörpers eine Durchgangsöffnung (125) zum Durchleiten des Fluids in einer Öffnungsstellung des Schließkörpers (111) umfasst.

11. Steckverbinder (100) nach einem der vorangehenden Ansprüche, wobei der Schließkörper (111) einen tellerförmigen Dichtabschnitt (127) zum Verschließen der Auslassöffnung (109) umfasst.

12. Steckverbinder (100) nach einem der vorangehenden Ansprüche, wobei der tellerförmige Dichtabschnitt (127) einen größeren Durchmesser als die Auslassöffnung (109) umfasst.

13. Steckverbinder (100) nach einem der vorangehenden Ansprüche, wobei der tellerförmige Dichtabschnitt einen geringeren Durchmesser als die Ventilkammer (105) aufweist, damit das Fluid in der Öffnungsstellung des Schließkörpers (111) zwischen dem Dichtabschnitt und einer Seitenwand der Ventilkammer (105) vorbeiströmen kann.

14. Steckverbinder (100) nach einem der vorangehenden Ansprüche, wobei der Schließkörper (111) durch einen zylinderförmigen Hohlkörper gebildet ist.

15. Steckverbinder (100) nach einem der vorangehenden Ansprüche, wobei der Schließkörper (111) und das Betätigungselement (113) durch ein einstückiges Formteil gebildet sind.
